# FASCICULE DE BREVET EUROPEEN

(11) **EP 0 527 519 B1**
(45) Date de publication et mention de la délivrance du brevet: **08.05.1996**
(21) Numéro de dépôt: 92202262.9
(22) Date de dépôt: 23.07.1992
(51) Int. Cl.: B65G 47/96, B65G 17/06

(54) **Dispositif de convoyage de produits, notamment de fruits**
Fördereinrichtung für Produkte, insbesondere für Früchte
Conveying device for products, especially for fruits

(30) Priorité: 14.08.1991 FR 9110393
(43) Date de publication de la demande: 17.02.1993
(73) Titulaire: MATERIEL POUR L'ARBORICULTURE FRUITIERE (M.A.F.) S.A., F-82000 Montauban (FR)
(72) Inventeur: Blanc, Philippe, F-82000 Montauban (FR)
(74) Mandataire: Cabinet BARRE LAFORGUE & associés

(56) Documents cités:
- EP-A- 0 345 036
- WO-A-89/08510
- DE-C- 415 773
- US-A- 4 993 535

## Description

La présente invention concerne un dispositif de convoyage de produits, notamment de fruits, adapté pour effectuer un triage desdits produits en fonction de critères de sélection prédéterminés.

L'invention vise plus particulièrement des moyens de déchargement de ces produits.

De tels dispositifs de convoyage sont d'une utilisation courante pour le triage des fruits et sont notamment décrits dans les brevets Us 4.569.434, GB 2.143.491 et GB 2.126.356. Ils se composent d'un convoyeur le long duquel sont répartis des supports pour les fruits, de postes de contrôle destinés à déterminer le poids et la couleur de ces fruits, et de zones de déchargement des fruits, où ces derniers sont sélectivement déversés en fonction de paramètres de tri prédéterminés.

De tels dispositifs présentent des avantages importants mais également de nombreux inconvénients. Notamment le taux de remplissage de tels convoyeurs est faible. En outre, le débit de ces convoyeurs gagnerait à être accéléré. Enfin, de tels dispositifs ne présentent pas de moyens de déchargement non traumatisants, rapides, robustes et sûrs pour les fruits.

Ce dernier inconvénient relatif aux moyens de déchargement est partiellement résolu par les dispositifs décrits dans les brevets WO 89/08510 (Hiebert) et EP 0.345.036 qui comportent des moyens de déchargement de fruits agissant par soulèvement des fruits et par inclinaison du support de fruits vers l'extérieur. Ces moyens de déchargement comportent des éjecteurs placés entre chaque rouleau d'une pluralité de rouleaux, et présentent des axes de pivotement maintenus au niveau d'une seule de leurs extrémités. De ce fait, lors du soulèvement des fruits et en fonction de la taille de ceux-ci, un tel axe de pivotement travaille en porte-à-faux, ce qui a tendance à l'user prématurément et à provoquer rapidement la cassure de cette pièce. En outre, le dispositif de convoyage selon ce document a un rendement faible.

La présente invention vise à pallier l'ensemble de ces inconvénients, et a pour premier objectif la création d'un dispositif de convoyage à haut débit, muni de moyens de déchargement non traumatisants pour les produits, tout en étant robuste et résistant à l'usure.

Un autre objectif de l'invention est de fournir un dispositif de convoyage comportant des moyens de déchargement des produits favorisant la chute de ces derniers quelles que soient leurs formes.

A cet effet, la présente invention concerne un dispositif de convoyage de produits, notamment de fruits, adapté pour effectuer un triage desdits produits en fonction de critères de sélection prédéterminés, comprenant :
- des moyens de convoyage comportant une pluralité de rouleaux, chacun supporté par un axe A, et définissant entre eux un logement adapté pour recevoir un produit, chacun des rouleaux étant disposé orthogonalement à une chaîne d'entraînement sans fin et solidaire de cette dernière par son axe de rotation A,
- des moyens de déchargement des produits comportant une pluralité d'éjecteurs, chacun étant logé entre deux rouleaux successifs sous le produit situé dans le logement correspondant, et étant adapté pour pivoter autour d'un axe de pivotement entre une position de repos et une position de déchargement.

Selon l'invention, ce dispositif de convoyage se caractérise en ce que :
- les moyens de convoyage comprennent une paire de lignes de convoyage, chacune adaptée pour transporter les produits et située de part et d'autre et sensiblement parallèlement à la chaîne d'entraînement sans fin, chaque ligne comportant une pluralité de rouleaux,
- chaque axe de pivotement associé à un éjecteur est porté par une extrémité dudit éjecteur située à l'opposé de la chaîne,
- une pluralité de pièces de solidarisation sont montées chacune libre en rotation sur l'axe A d'un rouleau, de façon à relier la pluralité des axes de pivotement avec une liberté de débattement angulaire et longitudinal desdits axes de pivotement entre eux.

Grâce à ces dispositions, pour une seule chaîne, on trouve deux lignes de convoyage, ce qui double le rendement du dispositif de convoyage par rapport aux dispositifs connus. En outre, la disposition symétrique de chacune des deux lignes de part et d'autre de la chaîne permet un meilleur équilibre des forces en présence, d'où une usure moindre de la chaîne.

On crée en outre un ensemble d'éjecteurs dont l'axe de pivotement est continuement maintenu et guidé. On évite, de ce fait, le travail en porte-à-faux des axes de pivotement, ce qui diminue l'usure de telles pièces.

En outre, la liaison de tous les axes de pivotement de chaque ligne de convoyage rigidifie l'ensemble du dispositif de convoyage, ce qui lui assure une bonne robustesse.

On réalise ainsi un dispositif de convoyage à haut débit, de capacité double par rapport aux dispositifs connus, et muni de moyens de déchargement non traumatisants agissant par soulèvement et inclinaison des produits et qui, en outre, présente une structure rigidifiée par la liaison de tous les axes de pivotement d'une même ligne de convoyage.

Avantageusement, chaque pièce de solidarisation permet une liberté de débattement angulaire et longitudinal de l'extrémité de l'axe de pivotement qu'elle reçoit. De ce fait, le dispositif de convoyage selon l'invention peut présenter des parties plates et des parties courbes. Les axes de pivotement peuvent, en effet, modifier leur inclinaison les uns par rapport aux autres afin de suivre les parties courbes de la chaîne sans fin, sans se rompre, ou induire de distorsions.

Des moyens d'analyse des produits, adaptés pour en déterminer la taille et/ou le poids, et/ou la couleur. etc... sont placés en regard de chacune des lignes de convoyage.

Selon un mode de réalisation préférentiel de l'invention, chaque pièce de solidarisation est munie d'un alésage adapté pour recevoir l'extrémité opposée à la châine de l'axe de rotation d'un rouleau, et sur une première face. d'un orifice adapté pour recevoir en force une première extrémité d'un premier axe de pivotement et sur une seconde face, opposée à la première, d'une cavité pour loger avec une liberté de débattement angulaire et longitudinal, une seconde extrémité d'un second axe de pivotement.

Ainsi, chaque pièce de solidarisation relie deux axes de pivotement successifs et est montée libre en rotation sur l'axe de rotation d'un rouleau.

Avantageusement, chaque éjecteur pivote entre une position de repos dans laquelle un bras de support de l'éjecteur est placé sensiblement à l'horizontale sous le produit, et une position de déchargement dans laquelle le bras de support est incliné vers l'extérieur de la ligne de convoyage. Ces deux positions sont déterminées par la coopération d'un ergot et d'un évidement.

On notera que la cavité de la pièce de solidarisation est ouverte sur deux de ces faces, ce qui permet l'extraction de l'unité constituée par un axe de pivotement et une pièce de solidarisation dans laquelle il est positionné an force, sans avoir à retirer l'ensemble des axes de pivotement. Il est ainsi possible d'intervenir rapidement et facilement pour remplacer une pièce cassée ou usagée.

Avantageusement, la dispositif de convoyage selon l'invention comporte des moyens d'alimentation en produits comprenant une zona a inclinaison contrôlée. Cette inclinaison est de préférence comprise entra 7 et 16°. En réglant l'inclinaison de cette zone, an fonction de la taille des fruits à trier, on réalise une répartition homogène des fruits dans las logements prévus à cet effet entre deux rouleaux. Une telle disposition permet de remplir correctement le dispositif de convoyage selon l'invention afin d'avoir un fruit par logement, et pratiquement aucun logement de vida. On améliore ainsi le débit d'un tel dispositif de convoyage.

D'autres objets caractéristiques et avantages de la présente invention ressortiront de la description qui suit, à titre d'exemple non limitatif, an référence aux dessins annexés dans lesquels :
- la figure 1 est une vue en perspective d'un dispositif de convoyage selon l'invention, sur laquelle quelques rouleaux ont été omis pour la clarté du dessin,
- la figure 2 est une vue en coupe longitudinale d'un éjecteur associé à un rouleau,
- la figure 3 est une vue de face selon la flèche F de la figure 1 des moyens de déchargement selon l'invention, et des rouleaux associés,
- les figures 4a à 4c sont des vues an coupe longitudinale avec arrachements partiels semblables à celles de la figure 2 et montrant le pivotement de l'éjecteur lors de la décharge des fruits,
- la figure 5 est une vue en coupe longitudinale du dispositif de convoyage selon l'invention, au niveau de la zone de chargement et,
- la figure 6 est une vue en coupe longitudinale du dispositif de convoyage selon l'invention montrant la débattement angulaire et longitudinal des axes de pivotement lorsque le dispositif de convoyage est entraîné selon une partie courbe.

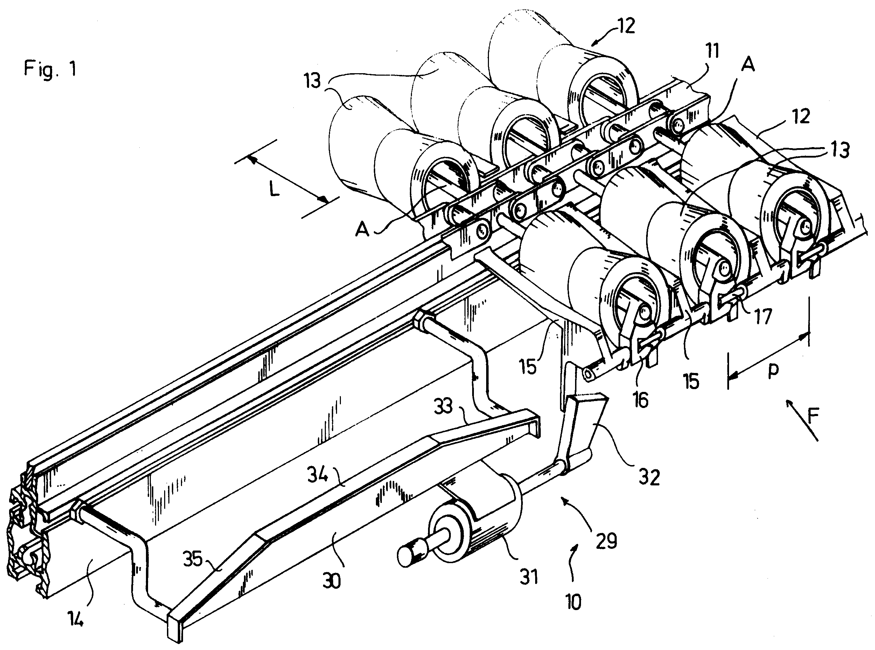

Selon la forme de réalisation représentée aux figures 1 à 6, la dispositif selon l'invention est adapté pour réaliser le triage et la sélection de fruits.

Ce dispositif de convoyage 10 comporte une chaîne sans fin dite chaîne d'entraînement 11 de part et d'autre de laquelle sont réparties, parallèlement à la chaîne, deux lignes de convoyage 12. La chaîne 11 est supportée et guidée par un bâti 14.

Chacune des lignes de convoyage est constituée par une pluralité de rouleaux 13 identiques. Chaque rouleau 13 présente la forma d'un bicône et comporte un revêtement externe en caoutchouc ou analogue et un coeur en matière plastique.

Si l'on désigna par p la pas séparant deux rouleaux, la diamètre D de chaque rouleau sera de préférence compris entre 0,5 p et 1 p et la longueur L de chaque rouleau sera de préférence comprise entre 0,7 p et 1,25 p.

Chaque rouleau est supporté par un axe A autour duquel il est libre an rotation. Cet axe A est solidaire de la châine d'entraînement 11 et est disposé orthogonalement à celle-ci.

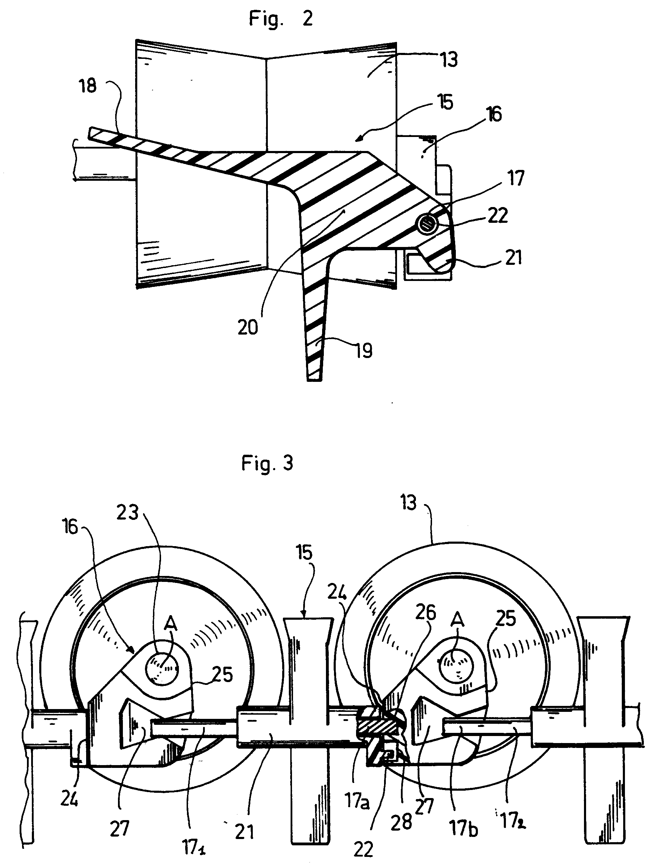

Des moyens de déchargement (figures 2 et 3) comportant un éjecteur 15, une pièce de solidarisation 16 et un axe de pivotement 17 sont placés entra chaque rouleau.

Chaque éjecteur (figure 2) comporte un bras de support 18, un bras d'éjection 19 et un corps 20. Le corps 20 est muni sur sa face opposée aux deux bras 18 et 19, d'une extension bilatérale 21 (figure 3) percée d'un alésage 22. Cette extension 21 présente une partie déportée munie d'un ergot 22.

L'axe de pivotement 17 est reçu dans l'alésage 22 de l'éjecteur.

Chaque pièce de solidarisation 16 comporte un alésage 23 adapté pour recevoir l'extrémité opposée à la chaîne 11 de l'axe de rotation A des rouleaux. Elle présente également sur une première face 24 un orifice 26 adapté pour recevoir en force une première extrémité 17a d'un premier axe de pivotement 17₁.

Chaque pièce de solidarisation présente en outre sur une seconde face 25, opposée à la première face 24, une cavité 27 présentant une partie évasée adaptée pour loger avec une liberté de débattement angulaire et longitudinal une seconde extrémité 17b d'un second axe de pivotement 17₂.

Le maintien de cet axe de pivotement dans la cavité se fait ainsi avec un certain jeu autorisant les débattements ci-dessus indiqués. En outre, l'ouverture de la cavité 27 sur deux de ses faces parmet une extraction facile de l'extrémité de l'axe de pivotement introduite dans cette cavité, ceci parallèlement à lui-même et sans démontage de l'ensemble des axes de pivotement.

Lorsqu'il est nécessaire de remplacer un axe de pivotement, il suffit d'extraire cet axe avec le pièce de solidarisation dans laquelle il est emmanché à force, et de la remplacer par une nouvelle unité monobloc comportant un axe de pivotement et une pièce de solidarisation.

La pièce de solidarisation 16 est en outre munie sur sa première face 24 d'un évidement 28 adapté pour coopérer avec l'ergot 22 de l'éjecteur 15 (figure 3).

Bien entendu, de tels moyens de déchargement sont placés entre chacun des rouleaux, de sorte que tous les axes de pivotement 17 d'une même ligne de convoyage soient reliés entre eux, avec possibilité de débattement angulaire et longitudinal.

Comme on peut mieux le remarquer à la figure 1, des moyens d'éjection 29 sont fixés sur la bâti 14 supportent la chaîne d'entraînement 11.

Ces moyens d'éjection comprennent une rampe d'éjection 30 portée de façon radialement et axialement déportée par le bâti 14, et un dispositif à électro-aimant 31 muni d'un poussoir 32.

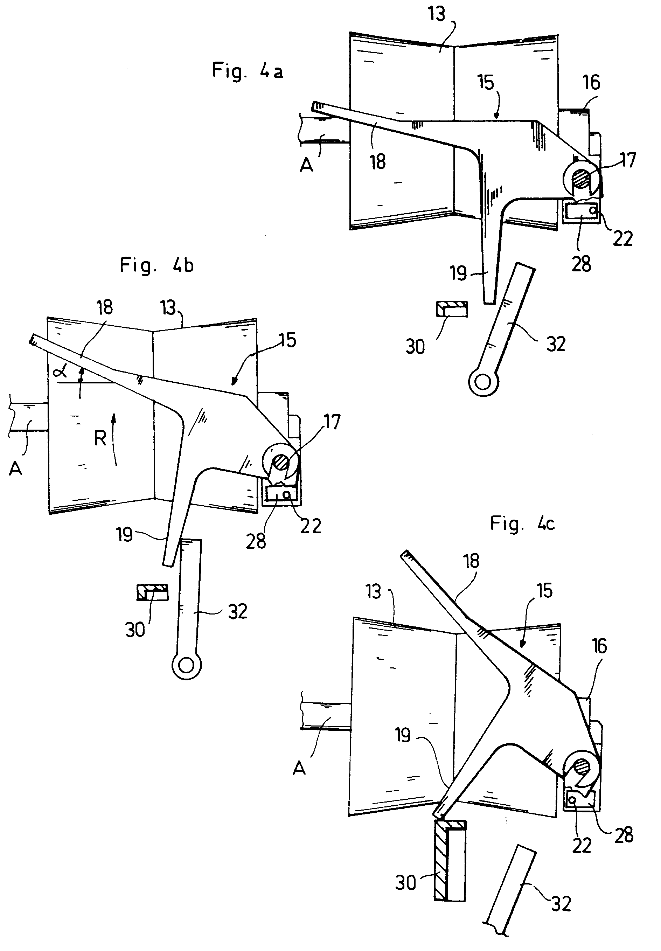

Comme cela est plus visible aux figures 4a à 4c, les moyens d'éjection coopèrant avec l'éjecteur 15 pour provoquer la pivotement de celui-ci.

Lorsque l'ordre de sélectionner un fruit sur la ligne de convoyage est donné, l'électro-aimant qui, à l'état de repos sa trouve dans la position représentée à la figure 4a, c'est-à-dira avec un poussoir 32 éloigné du bras d'éjection 19 de l'éjecteur et éloigné de la rampe 30, est excité et passa dans une position telle que représentée à la figure 4b.

Dans cette figure 4b, le poussoir 32 de l'électro-aiment est venu au contact du bras d'éjection 19 et a amené celui-ci au-dessus de la rampe 30. De ce fait, l'éjecteur a été entraîné en rotation selon le sens de la flèche R et le bras de support 18 se trouve en position inclinée par rapport à l'horizontale d'un certain angle α .

Comme on le voit mieux à la figure 1, la rampe 30 présente une partie ascendante 33, une partie horizontale 34 et une partie descendante 35.

Lorsque le poussoir 32 poussa la bras d'éjection 19 au-dessus de la rampe, celui-ci accède à la rampe au niveau de sa partie ascendante 33. Il suit alors cette rampe 30 qui lui sert de came, sur toute sa partie 34 qui correspond à l'inclinaison maximale de l'éjecteur représentée à la figure 4c.

Dans cette position, la bras d'éjection est repoussé au maximum vers la haut, l'éjecteur est an position maximale de pivotement, et la fruit posé dans le logement entra les rouleaux est soulevé par l'éjecteur et incliné afin de le faire chuter vers l'extérieur de la ligne de convoyage. Puis le bras d'éjection suit la partie descendante 35 de la rampe 30, le pivotement est inversé et l'éjecteur reprend sa position de repos.

Il est à noter que, durant la pivotement de l'éjecteur an coopération avec la poussoir 32 de l'électroaimant et la came 30, l'ergot 22 de l'éjecteur passe d'une position extrême à droite de l'évidement 28 à la figure 4a, à une position extrême à gauche de l'évidement à le figure 4c.

L'ergot en coopération avec l'évidement 28 limite ainsi la pivotement de l'éjecteur entre une position de repos dans laquelle le bras de support de l'éjecteur est sensiblement horizontal, et une position de déchargement dans laquelle la bras de support de l'éjecteur est dans une position fortement inclinée.

Il est en outre souligné que des moyens d'analyse (non représentés), notamment colorimétrique, (par exemple comportant des caméras vidéo), sont associés à chaque ligne de convoyage de sorte que la taille et/ou le poids, et/ou la couleur, et/ou le degré de maturité des fruits portés par les lignes de convoyage soient déterminés à distance. En fonction de cas informations, lorsque la fruit arrive dans la zone de sélection, un dispositif de calcul excite l'électroaimant qui permet de faire chuter ce fruit dans un réceptacle où tous las fruits présentant les mêmes caractéristiques que lui sont recueillis. On effectue ainsi la triage de ces fruits en fonction de critères de sélection prédéterminés.

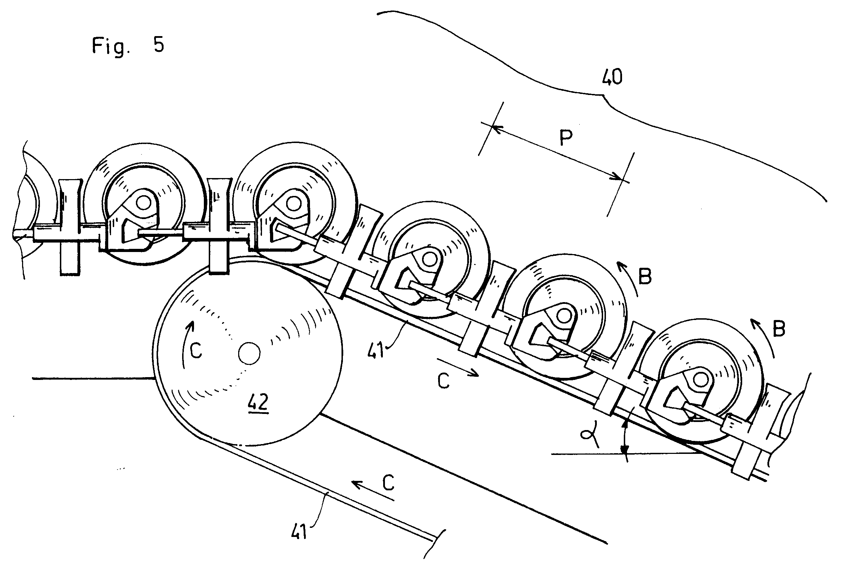

Le dispositif de convoyage selon l'invention est an outre muni de moyens d'alimentation an fruits des lignes de convoyage (figure 5). De tels moyens d'alimentation font partie intégrante du dispositif de convoyage selon l'invention et comporte une zone de chargement 40 à inclinaison α contrôlée.

Cette zone 40 comporte an outre des moyens d'entraînement en rotation des rouleaux qui la composent. Cas moyens d'entraînement comportent une courroie sans fin 41, entraînée en rotation par un moteur (non représenté) et une poulie de renvoi 42.

Sur la figure 5, la courroie 41 est entraînée salon le sans des flèches C. Cette courroie passe au milieu et à la partie inférieure de chaque rouleau 13, de sorte que, par frottement, alla entraîne an rotation ces rouleaux dans le sens des flèches B. De par la rotation des rouleaux 13, les fruits ont tendance à se placer en position stable entre chaque rouleau dans le logement qui leur est réservé. on assure ainsi une bonne répartition des fruits en en plaçant un par logement.

En outre, et avantageusement, l'inclinaison α de la zone de chargement est variable de préférence entre 7 et 16° afin de l'adapter à la taille des fruits alimentant cette zone de chargement 40. On réalise ainsi un remplissage optimal des lignes de convoyage, ou pratiquement chaque logement entre deux rouleaux est occupé par un fruit.

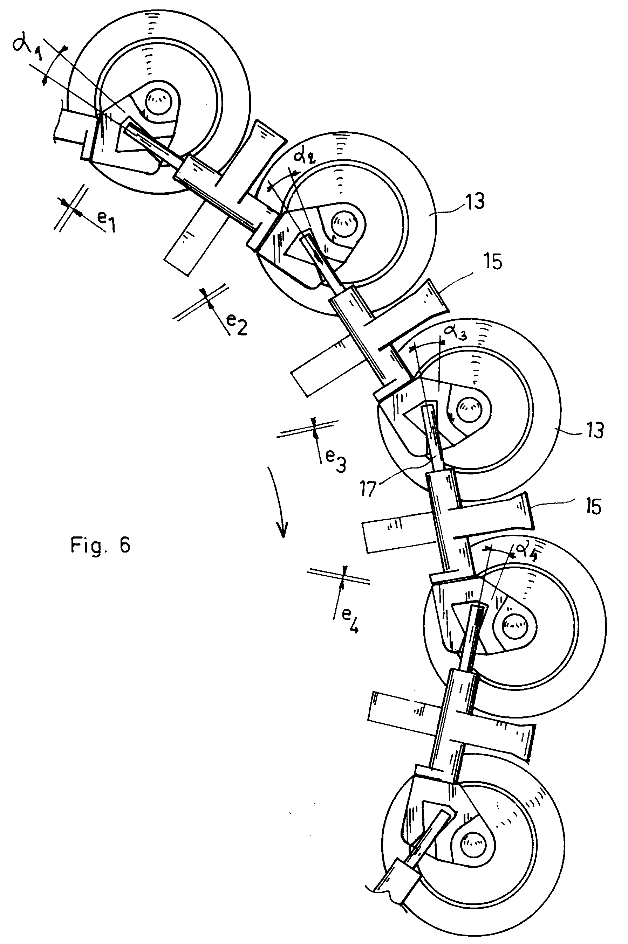

Comme cela est représenté à la figure 6, la chaîne sans fin du dispositif de convoyage selon l'invention tourne en circuit fermé, et avec elle les deux lignes de convoyage qu'elle porte. De ce fait, dans les parties courbes, dont seulement une partie est représentée à la figure 6, la liaison des axes de pivotement 17 est telle qu'elle permet à chacun d'eux de pivoter dans la cavité 27 angulairement mais aussi longitudinalement. On notera ainsi que les angles α₁...α₄ varient tout au long de la courbe et que la distance libre e₁...e₄ en fond de cavité varie également sans contraintes, ce qui permet à l'ensemble du dispositif de convoyage de rester relié sans être gêné par la partie courbe.

Ainsi, le dispositif de convoyage selon l'invention est rigidifié par la liaison des axes de pivotement de chaque ligne de convoyage sans que cette liaison ne pénalise le suivi des parties courbes par la chaîne sans fin.

## Revendications

1. Dispositif de convoyage de produits, notamment de fruits, adapté pour effectuer un triage desdits produits en fonction de critères de sélection prédéterminés, du type comprenant :
- des moyens de convoyage (12) comportant une pluralité de rouleaux (13), chacun supporté par un axe A, et définissant entre eux un logement adapté pour recevoir un produit, chacun des rouleaux étant disposé orthogonalement à une chaîne d'entraînement sans fin (11) et solidaire de cette dernière par son axe de rotation (A),
- des moyens de déchargement des produits comportant une pluralité d'éjecteurs (15), chacun étant logé entre deux rouleaux successifs (13) sous le produit situé dans le logement correspondant, et étant adapté pour pivoter autour d'un axe de pivotement (17) entre une position de repos et une position de déchargement, ledit dispositif de convoyage étant caractérisé en ce que :
- les moyens de convoyage comprennent une paire de lignes de convoyage (12), chacune adaptée pour transporter les produits et située de part et d'autre et sensiblement parallèlement à la chaîne d'entraînement sans fin (11), chaque ligne comportant une pluralité de rouleaux (13),
- chaque axe de pivotement (17) associé à un éjecteur (15) est porté par une extrémité dudit éjecteur située à l'opposé de la chaîne (11),
- une pluralité de pièces de solidarisation (16) sont montées chacune libre en rotation sur l'axe (A) d un rouleau (13), de façon à relier la pluralité des axes de pivotement (17) avec une liberté de débattement angulaire et longitudinal desdits axes de pivotement entre eux.

2. Dispositif selon la revendication 1, caractérisé en ce qu'il comporte en outre des moyens d'analyse des produits transportés par les lignes de convoyage (12).

3. Dispositif selon la revendication 1 ou 2, caractérisé en ce que chaque pièce de solidarisation (16) est munie d'un alésage (22) adapté pour recevoir l'extrémité opposée à la châine de l'axe de rotation A d'un rouleau, et sur une première face (24), d'un orifice (26) adapté pour recevoir en force une première extrémité (17a) d'un premier axe de pivotement (17₁) et sur une seconde face (25), opposée à la première, d'une cavité (27) pour loger avec une liberté de débattement angulaire et longitudinal, une seconde extrémité (17b) d'un second axe de pivotement (17₂).

4. Dispositif selon l'une des revendications 1 à 3, caractérisé an ce que chaque éjecteur (15) comporte un bras de support (18) et un bras d'éjection (19) solidaires d'un corps (20) muni à l'opposé de ces deux bras d'une extension bilatérale (21) percée d'un alésage (22) adapté pour recevoir l'axe de pivotement (17) associé à cet éjecteur.

5. Dispositif salon la revendication 4, caractérisé an ce que l'extension bilatérale (21) est munie à l'une de ses extrémités d'une partie déportée ayant un ergot (22).

6. Dispositif selon la revendication 5, caractérisé en ce que chaque pièce de solidarisation (16) est en outre munie sur sa première face (24) d'un évidement (28), et en ce que l'ergot (22) de l'éjecteur (15) coopère avec l'évidement (28) de la pièce de solidarisation (16), de sorte que le pivotement de l'éjecteur (15) soit limité entre une position de repos où le bras de l'éjecteur est sensiblement horizontal et une position de déchargement dans laquelle le bras de l'éjecteur est incliné.

7. Dispositif selon la revendication 3, caractérisé an ce que la cavité (27) présente une partie évasée adaptée pour permettre la débattement longitudinal et angulaire de l'axe de pivotement (17) qu'elle reçoit.

8. Dispositif selon la revendication 3 ou 7, caractérisé en ce que la cavité (27) est ouverte sur deux faces, de sorte que la seconde extrémité (17b) d'un axe de pivotement puisse être extraite de la cavité parallèlement à elle-même sans démontage de l'ensemble des axes de pivotement (17).

9. Dispositif salon la revendication 3, caractérisé en ce que la seconde extrémité (17b) d'un axe de pivotement (17) et une pièce de solidarisation (16) associée constituant une unité monobloc.

10. Dispositif selon l'une des revendications précédentes, caractérisé en ce que la pluralité d'axes de pivotement (17) est sensiblement orthogonale à la pluralité d'axes de rotation A des rouleaux.

11. Dispositif selon l'une des revendications précédentes, caractérisé en ce qu'il comporte en outre des moyens d'alimentation (40) en produits des lignes de convoyage (12), adaptés pour séparer chaque produit et pour an déposer un dans chaque logement.

12. Dispositif salon la revendication 11, caractérisé en ce que las moyens d'alimentation (40) font partie intégrante de chaque ligne de convoyage (12) et comprennent une zone de chargement à inclinaison contrôlée α , en fonction de la taille des produits à séparer et à déposer.

13. Dispositif selon la revendication 12, caractérisé an ce que l'inclinaison α de la zone de chargement est de préférence comprise entre 7 et 16°.

14. Dispositif selon l'une des revendications précédentes, caractérisé an ce que le diamètre D de chaque rouleau est de préférence compris entra 0,5 p à 1 p, où p est le pas séparant chaque rouleau, et la longueur de chaque rouleau L est de préférence compris entre 0,7 p à 1,25 p.

## Claims

1. Conveying device for products, especially for fruit, designed to effect sorting of said products as a function of predetermined selection criteria, of the type comprising:
- conveying means (12), comprising a plurality of rollers (13), whereby each roller is supported by a spindle (A) and said rollers define between themselves a seat suitable for receiving a product, each of the rollers being arranged at right angles to a continuous drive chain (11) and linked with the latter by its spindle of rotation (A).
- product-unloading means comprising a plurality of ejectors (15), whereby each of said ejectors is located between two successive rollers (13) below the product situated in the corresponding seat and is so designed as to pivot about a pivot spindle (17) between a position of rest and an unloading position, said conveying device being characterised in that:
- the conveying means comprise a pair of conveying lines (12), each of which is designed for transporting the product and located at either side of the continuous drive chain (11) and substantially parallel thereto, with each line comprising a plurality of rollers (13),
- each pivot spindle (17) associated with an ejector (15) is supported by an end of said ejector remote from said chain (11),
- a plurality of linking pieces (16) are each mounted to be free to rotate about the spindle (A) of a roller (13), so as to link the plurality of pivot spindles (17) subject to a certain freedom of angular and longitudinal deflection of said pivot spindles in relation to one another.

2. Device according to Claim 1, characterised in that in addition it comprises means for analysing products transported by the conveying lines (12).

3. Device according to Claim 1 or 2, characterised in that each linking element (16) is provided with a bore hole (22) designed to accommodate the end remote from the chain of the rotation spindle A of a roller as well as with an aperture (26) in a first face (24), said aperture being designed to accommodate subject to a force a first end (17a) of a first pivot spindle (17₁) and a cavity (27) in a second face (25) opposite the first face, with a view to accommodating a second end (17b) of a second pivot spindle (17₂) subject to a certain freedom of angular and longitudinal deflection.

4. Device according to one of Claims 1 to 3, characterised in that each ejector (15) comprises a support arm (18) and an ejection arm (19) integral with a body (20) which is equipped opposite these two arms with a bilateral extension (21) having a bore hole (22) so designed as to accommodate the pivot spindle (17) associated with said ejector.

5. Device according to Claim 4, characterised in that the bilateral extension (21) is provided at one of its ends with an offset zone comprising a projection (22).

6. Device according to Claim 5, characterised in that each linking element (16) is moreover provided in its first face (24) with a recess (28) and in that the projection (22) of the ejector (15) cooperates with the recess (28) of the linking element (16) in such a way that the pivoting movement of the ejector (15) is restricted between a position of rest in which the arm of the ejector is substantially horizontal, and an unloading position in which the arm of the ejector is inclined.

7. Device according to Claim 3, characterised in that the cavity (27) comprises a flared part so designed as to enable both longitudinal and angular deflection of the pivot spindle (17) accommodated by said cavity.

8. Device according to Claim 3 or 7, characterised in that the cavity (27) is open on two sides so that the second end (17b) of a pivot spindle can be extracted from the cavity parallel to said cavity without the assembly of pivot spindles (17) having to be dismantled.

9. Device according to Claim 3, characterised in that the second end (17b) of a pivot spindle (17) and an associated linking element (16) constitute a monoblock unit.

10. Device according to one of the preceding claims, characterised in that the plurality of pivot spindles (17) is substantially orthogonal to the plurality of rotation spindles A of the rollers.

11. Device according to one of the preceding claims, characterised in that it moreover comprises feeding means (40) for supplying the conveying lines (12) with products, said feeding means being so designed as to separate the products from each other and to deposit one of said products in each seat.

12. Device according to Claim 11, characterised in that the feeding means (40) constitute an integral part of each conveying line (12) and comprise a loading zone, the inclination α of which is controlled in accordance with the size of the products to be separated and deposited.

13. Device according to Claim 12, characterised in that the inclination α of the loading zone preferably amounts to between 7 and 16°.

14. Device according to one of the preceding claims, characterised in that the diameter D of each roller preferably amounts to between 0.5 p and 1 p, where p is the pitch separating the individual rollers, while the length L of each roller preferably amounts to between 0.7 p and 1.25 p.

## Patentansprüche

1. Fördereinrichtung für Produkte und zwar insbesondere für Früchte, geeignet zum Sortieren der besagten Produkte in Abhängigkeit von vorbestimmten Auswahlkriterien, der folgende Teile umfassenden Art:
- Fördermittel (12), umfassend eine Mehrzahl von Rollen (13), von denen jede durch eine Spindel (A) abgestützt ist und die untereinander einen zur Aufnahme eines Produkts geeigneten Sitz abgrenzen, wobei jede der Rollen senkrecht zu einer endlosen Antriebskette (11) angeordnet und mit letzterer durch deren Drehspindel (A) zu einer Einheit verbunden ist,
- Produktentlademittel, umfassend eine Mehrzahl von Ausstoßvorrichtungen (15), von denen jede zwischen zwei aneinander anschließenden Rollen (13) unterhalb des in dem entsprechenden Sitz befindlichen Produkts angeordnet und zum Schwenken um eine Schwenkspindel (17) zwischen einer Ruhelage und einer Entladelage konstruiert ist, wobei die besagte Fördereinrichtung dadurch gekennzeichnet ist,
- daß die Fördermittel ein Paar Förderreihen (12) umfassen, die jeweils zur Beförderung der Produkte geeignet und zu beiden Seiten und im wesentlichen parallel zu der endlosen Antriebskette (11) angeordnet sind, wobei jede Reihe eine Mehrzahl von Rollen (13) umfaßt,
- daß jede mit einer Ausstoßvorrichtung (15) in Verbindung stehende Schwenkspindel (17) durch ein im Verhältnis zu der Kette (11) fernliegendes Ende der besagten Ausstoßvorrichtung abgestützt ist,
- daß eine Mehrzahl von Verbindungstücken (16) angeordnet ist, von denen jedes um die Spindel (A) einer Rolle (13) frei drehbar ist, um die Mehrzahl der Schwenkspindeln (17) bei einer gewissen Winkel- und Längsausschlagfreiheit der besagten Schwenkspindel untereinander zu verbinden.

2. Einrichtung nach Anspruch 1, dadurch gekennzeichnet, daß sie des weiteren Mittel zur Analyse der durch die Förderreihen (12) beförderten Produkte umfaßt.

3. Einrichtung nach Anspruch 1 oder 2, dadurch gekennzeichnet, daß jedes Verbindungsstück (16) mit einer Bohrung (22) versehen ist, welche zur Aufnahme des im Verhältnis zu der Kette fernliegenden Endes der Drehspindel A einer Rolle geeignet ist, sowie mit einer Öffnung (26) in einer ersten Fläche (24), wobei die besagte Öffnung (26) so beschaffen ist, daß sie ein erstes Ende (17a) einer ersten Drehspindel (17₁) kraftschlüssig aufnimmt, und eines Hohlraums (27) in einer zweiten, der ersten Fläche entgegengesetzten Fläche (25) zur Aufnahme bei einer gewissen Winkel- und Längsausschlagfreiheit eines zweiten Endes (17b) einer zweiten Schwenkspindel (17₂).

4. Einrichtung nach einem der Ansprüche 1 bis 3, dadurch gekennzeichnet, daß jede Ausstoßvorrichtung (15) einen Abstützarm (18) sowie einen Ausstoßarm (19) umfaßt, die mit einem Körper (20) einstückig geformt sind, wobei der besagte Körper (20) diesen beiden Armen gegenüber eine zweiseitige Verlängerung (21) aufweist, die mit einem Bohrloch (22) versehen ist, welches zur Aufnahme der mit dieser Ausstoßvorrichtung in Verbindung stehenden Schwenkspindel (17) geeignet ist.

5. Einrichtung nach Anspruch 4, dadurch gekennzeichnet, daß die zweiseitige Verlängerung (21) an einem ihrer Enden mit einem versetzten Teil versehen ist, der einen Vorsprung (22) aufweist.

6. Einrichtung nach Anspruch 5, dadurch gekennzeichnet, daß jedes Verbindungsstück (16) des weiteren an seiner ersten Fläche (24) mit einer Aussparung (28) versehen ist, sowie dadurch, daß der Vorsprung (22) der Ausstoßvorrichtung (15) mit der Aussparung (28) des Verbindungsstücks (16) so zusammenwirkt, daß die Schwenkbewegung der Ausstoßvorrichtung (15) zwischen einer Ruhelage, in der der Ausstoßarm im wesentlichen waagerecht ist, und einer Entladelage, in der der Arm der Ausstoßvorrichtung geneigt ist, begrenzt wird.

7. Einrichtung nach Anspruch 3, dadurch gekennzeichnet, daß der Hohlraum (27) einen aufgeweiteten Bereich aufweist, der so beschaffen ist, daß der Längs- und Winkelausschlag der aufgenommenen Schwenkspindel (17) ermöglicht wird.

8. Einrichtung nach Anspruch 3 oder 7, dadurch gekennzeichnet, daß der Hohlraum (27) an zwei Seiten offen ist, so daß das zweite Ende (17b) einer Schwenkspindel aus dem Hohlraum parallel zu diesem herausgezogen werden kann, ohne daß die Baugruppe der Schwenkspindel (17) zerlegt werden muß.

9. Einrichtung nach Anspruch 3, dadurch gekennzeichnet, daß das zweite Ende (17b) einer Schwenkspindel (17) und ein zugeordnetes Verbindungsstück (16) eine Einblockeinheit bilden.

10. Einrichtung nach einem der vorstehenden Ansprüche, dadurch gekennzeichnet, daß die Mehrzahl der Schwenkspindeln (17) zu der Mehrzahl der Rollendrehspindeln A im wesentlichen senkrecht ist.

11. Einrichtung nach einem der vorstehenden Ansprüche, dadurch gekennzeichnet, daß sie des weiteren Zustellmittel (40) zur Versorgung der Förderreihen (12) mit Produkten umfaßt, wobei die besagten Mittel so beschaffen sind, daß sie die einzelnen Produkte trennen und jeweils eines in jedem Sitz absetzen.

12. Einrichtung nach Anspruch 11, dadurch gekennzeichnet, daß die Zustellmittel (40) einen wesentlichen Bestandteil jeder Förderreihe (12) bilden und eine Beschickungszone mit je nach der Größe der zu trennenden und abzusetzenden Produkte geregelten Neigung α umfessen/umfaßt.

13. Einrichtung nach Anspruch 12, dadurch gekennzeichnet, daß die Neigung α der Beschickungszone vorzugsweise zwischen 7 und 16° beträgt.

14. Einrichtung nach einem der vorstehenden Ansprüche, dadurch gekennzeichnet, daß der Rollendurchmesser D vorzugsweise jeweils zwischen 0,5 p und 1 p beträgt, wobei p die die einzelnen Rollen trennende Steigung ist und die Länge L jeder Rolle vorzugsweise von 0,7 p bis 1,25 p beträgt.
